# EUROPEAN PATENT SPECIFICATION

(11) **EP 1 880 899 B1**
(45) Date of publication and mention of the grant of the patent: **01.07.2009**
(21) Application number: 06117229.2
(22) Date of filing: 14.07.2006
(51) Int. Cl.: B60P 7/12, B65D 19/44

(54) **A freight cradle**
Fracht-Wiege
Bâti pour un chargement

(43) Date of publication of application: 23.01.2008
(73) Proprietor: Lastrådgivaren Lundgren AB, 80645 Gävle (SE)
(72) Inventor: Lundgren, Lars, 805 96 Gävle (SE)
(74) Representative: Löfgren, Jonas

(56) References cited:
- WO-A-92/06012
- DE-A1- 2 842 869
- DE-A1- 19 637 714
- US-A- 4 382 733
- US-A- 5 743 689

## Description

### FIELD OF THE INVENTION AND PRIOR ART

The present invention relates to a freight cradle for supporting an object, such as a cylindrical or tubular object, on a floor surface and holding it in place. The cradle comprises a body formed of laminated sheets of corrugated cardboard, the body having a base surface, through which the cradle is intended to rest on a floor surface, and a support surface for receiving an object to be supported by the cradle. The laminated sheets of corrugated cardboard in the body are so arranged that the tubular channels formed between the corrugated flute boards and the planar linerboards of the laminated sheets extend between said base surface and support surface essentially perpendicular to the base surface.

In this description and the subsequent claims, the expression "linerboards" refers to the flat mutually parallel fibre boards of a sheet of corrugated cardboard, whereas the expression "flute boards" refers to the corrugated fibre boards of a sheet of corrugated cardboard interposed between the linerboards. Each flute board is arranged between two linerboards and bonded thereto by means of an adhesive. Another commonly used expression for such a flute board is "medium".

Freight cradles of corrugated cardboard for supporting cars and internal combustion engines during transport are previously known from US 5 743 689 A and US 4 382 733 A, respectively. These known cradles comprise a body formed of laminated sheets of corrugated cardboard, the sheets being so arranged that the tubular channels formed between the corrugated flute boards and the planar linerboards of the laminated sheets extend vertically. The respective cradle is provided with a support surface for receiving the object to be supported, and open-ended vertically extending channels of the above-indicated type end in the support surface. The corrugated cardboard material forms a rough support surface, which provides good frictional contact between the cradle and the supported object. Furthermore, the flexibility of the corrugated cardboard material allows the corrugated cardboard material at the region of the support surface to be compressed somewhat by the weight of the object, which further improves the frictional contact between the cradle and the supported object that is in contact with the support surface.

A problem associated with the above-indicated type of freight cradles of corrugated cardboard is the sensitivity of the cradles to moisture. When a freight cradle of corrugated cardboard is subjected to moisture, the moisture will in fact be absorbed by the corrugated cardboard, which will reduce the strength of the cradle. The exposure to moisture might in worst case result in a partial or total collapse of the cradle under the load of a supported object, which in its turn may cause serious and costly damages to the supported object.

DE 28 42 869 A1 shows a sheet of corrugated cardboard where a plastic film is embedded in the flute board of the sheet, the plastic film being covered on both sides by a layer of paper material.

### SUMMARY OF THE INVENTION

The object of the present invention is to provide a freight cradle of the above-indicated type which is less sensitive to moisture as compared to conventional freight cradles of corrugated cardboard.

According to the invention, this object is achieved by a freight cradle having the features defined in claim 1.

The inventive freight cradle is to be used for supporting an object, such as a cylindrical or tubular object, on a floor surface and holding it in place. The cradle comprises a body formed of laminated sheets of corrugated cardboard, the body having a base surface, through which the cradle is intended to rest on a floor surface, and a support surface for receiving an object to be supported by the cradle. The laminated sheets of corrugated cardboard in the body are so arranged that the tubular channels formed between the corrugated flute boards and the planar linerboards of the laminated sheets extend between said base surface and support surface essentially perpendicular to the base surface. According to the invention, a film of plastic material is embedded in the flute boards and the linerboards of the laminated sheets of corrugated cardboard in the body, the plastic film of each flute board and linerboard being covered on both sides by a layer of paper material.

It has surprisingly been found that a plastic film embedded in the flute boards and linerboards of the laminated sheets of corrugated cardboard will prevent a detrimental collapse of the freight cradle when subjected to heavy moisture. The flute boards and linerboards are not covered by the plastic film and the plastic film will therefore not completely prevent moisture from being absorbed by the paper material of the flute boards and linerboards. However, when the cradle is in use supporting an object and the base surface, which for instance rests on a floor in a railway goods wagon, is subjected to liquid such as water, liquid will be absorbed by the paper material of flute boards and linerboards of the corrugated cardboard sheets via the lower end surfaces thereof. The absorbed liquid will loosen up the paper material, which, under the weight of the supported object, will result in a partial collapse of the cradle body at the base surface up to a height of one or a few millimetres. This partial collapse implies that the lower ends of the flute boards and linerboards at the base surface will be bended so as to come to lay essentially flat against the floor surface under the cradle. Thus, the lower ends of the plastic films embedded in the flute boards and linerboards will likewise be bended so as to come to lay essentially flat against the floor surface while overlapping each other. It has been found that these bended and mutually overlapping ends of the plastic films will form a water-resistant barrier along the floor surface which efficiently counteracts further ingress of water from the base surface up into the flute boards and linerboards of the laminated sheets of corrugated cardboard in the cradle body. A further, detrimental collapse of the cradle is hereby prevented and the cradle may continue to support the object in question in a secure and satisfying manner. Furthermore, since the plastic films are embedded in the flute boards and linerboards of the sheets of corrugated cardboard and covered by layers of paper material, the plastic films will not affect the bonding properties between the flute boards and linerboards of an individual sheet and between linerboards of adjacent sheets.

According to the invention, the sheets of corrugated cardboard in the body are of the double wall type, each sheet consisting of three parallel linerboards and two flute boards with a first flute board arranged between a first linerboard and a second linerboard and the other flute board arranged between said second linerboard and a third linerboard. It has been found that the use of such sheets in the laminated body will give the base surface and support surface a satisfying rigidity and at the same time a very favourable flexibility.

According to a preferred embodiment of the invention, the sheets of corrugated cardboard in the body are joined to each other by means of waterproof adhesive comprising a water-repellent impregnating agent. When adjacent sheets of corrugated cardboard are glued to each other, the impregnating agent in the adhesive used will penetrate into the flute boards and the linerboards in the regions in the vicinity of the interface between the adjacent sheets of corrugated cardboard and impart improved water-repellency to the joined sheets of corrugated cardboard.

Different preferred embodiments of the inventive freight cradle will appear from the following description and the dependent claims.

### BRIEF DESCRIPTION OF THE DRAWINGS

With reference to the appended drawings, a specific description of preferred embodiments of the invention cited as examples follows below. In the drawings:
- Fig 1: is a schematic perspective view from above of a freight cradle according to a first embodiment of the present invention,
- Fig 2: is a schematic perspective view from below of the freight cradle of Fig 1,
- Fig 3: is a schematic perspective view illustrating the use of two freight cradles of the type shown in Figs 1 and 2 for supporting a circular cylindrical object,
- Fig 4: is a schematic perspective view illustrating the use of two freight cradles of the type shown in Figs 1 and 2 for supporting a circular cylindrical object in a railway goods wagon,
- Fig 5: is a schematic horizontal section through a part of a freight cradle according to the present invention, with a smaller part shown in a detail enlargement,
- Fig 6: is a schematic lateral view of a freight cradle of the type shown in Figs 1 and 2, shown when supporting an object and after a partial collapse of the lower region of the freight cradle closest to the base surface thereof,
- Fig 7: is a schematic perspective view from above of a freight cradle according to a second embodiment of the present invention, and
- Fig 8: is a schematic perspective view from below of the freight cradle of Fig 7.

### DETAILED DESCRIPTION OF PREFERRED EMBODIMENTS OF THE INVENTION

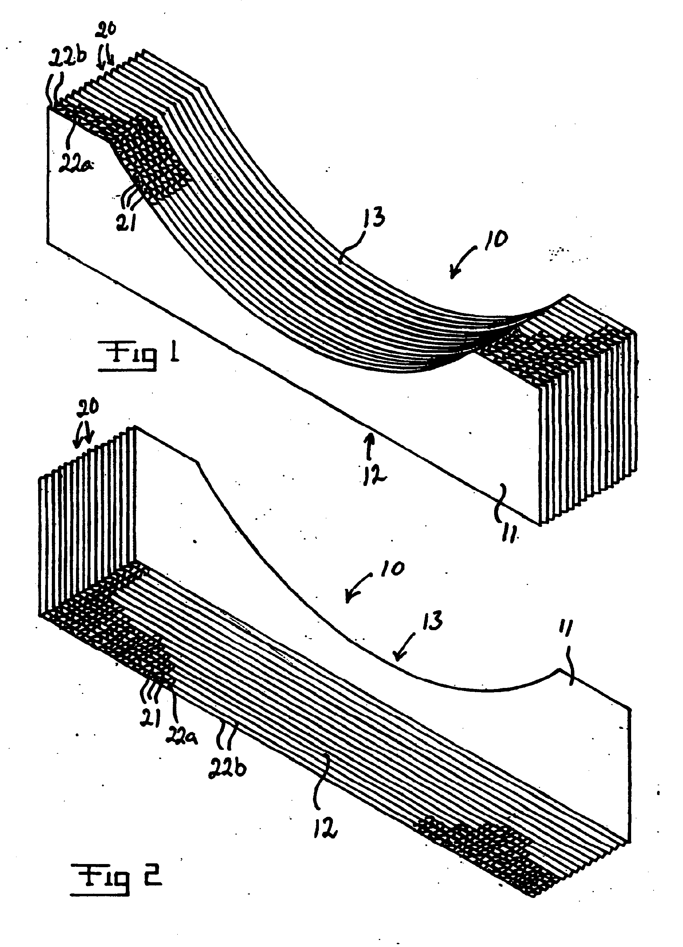

Figs 1 and 2 illustrate a freight cradle 10 according to the present invention for supporting an object on a floor surface and holding it in place. The freight cradle is particularly intended to be used to support an object during the transportation thereof, for instance in a railway goods wagon, a ship, a lorry, a semitrailer or the similar. The cradle 10 comprises a body 11 formed of laminated sheets 20 of corrugated cardboard. The body 11 has an essentially flat base surface 12, through which the cradle is intended to rest on a floor surface, and a support surface 13 for receiving an object to be supported by the cradle. In the illustrated example, the support surface 13 is concavely curved with an arc-shaped profile so as to essentially conform to the envelope surface of a circular cylindrical object to be supported by the cradle 10.

The laminated sheets 20 of corrugated cardboard in the body 11 are so arranged that the tubular channels 21 formed between the corrugated flute boards 22a and the planar linerboards 22b of the laminated sheets extend between the base surface 12 and the support surface 13 essentially perpendicular to the base surface 12. Thus, said tubular channels 21 of the sheets of corrugated cardboard forming the body 11 extend in a vertical direction when the freight cradle 10 is in use arranged with its base surface 12 in contact with a floor surface and its support surface 13 in contact with an object that is supported above the floor surface by means of the cradle. The planar linerboards 22b and the valleys and ridges of the corrugated flute boards 22a of said sheets 20 of corrugated cardboard will thus extend vertically when the freight cradle 10 is in use and arranged in the above-indicated manner. Furthermore, the planar linerboards 22b should be arranged to extend essentially perpendicular to the intended traveling direction of the transportation appliance, such as a vehicle, wagon or ship, in which the freight cradle 10 is used for supporting an object to be transported.

Only some of the flute boards 22a and linerboards 22b included in the body 11 of the cradle are shown in Figs 1 and 2, for the sake of simplicity. Thus, only some of the above-indicated channels 21 are shown in Figs 1 and 2.

The base surface 12 and support surface 13 are formed by outwardly facing edges of the flute boards 22a and linerboards 22b of the sheets of corrugated cardboard in the body 11. Vertically extending open-ended channels 21 of the above-indicated type end in the base surface 12 and support surface 13 and will thus form openings in base surface 12 and support surface 13 between the edges of the flute boards 22a and linerboards 22b extending along the respective surface 12, 13.

The corrugated cardboard material in the body 11 of the cradle 10 forms a rough support surface 13 for an object to be supported by the cradle, which provides good frictional contact between the cradle 10 and a supported object. Furthermore, the flexibility of the flute boards 22a and linerboards 22b of the sheets 20 of corrugated cardboard forming the body 11 allows the corrugated cardboard material at the region of the support surface 13 to be compressed somewhat by the weight of a supported object, which further improves the frictional contact between the cradle 10 and a supported object that is in contact with the support surface 13. The flexibility of said flute boards 22a and linerboards 22b also allows the upper edges of the flute boards and linerboards to be deformed in the horizontal direction by bending at the region of the support surface 13 when a supported object is displaced in relation to the cradle 10 horizontally, e.g. when the transportation appliance is suddenly decelerated or stopped. Such a deformation will also improve the frictional contact between the cradle 10 and a supported object that is in contact with the support surface 13 and counteract further displacement between the object and the cradle 10. Furthermore, the softness of the corrugated cardboard material forming the body 11 of the cradle 10 prevents the cradle from damaging a supported object, such as a large and heavy paper roll from a paper factory, which is sensitive to wear and impacts.

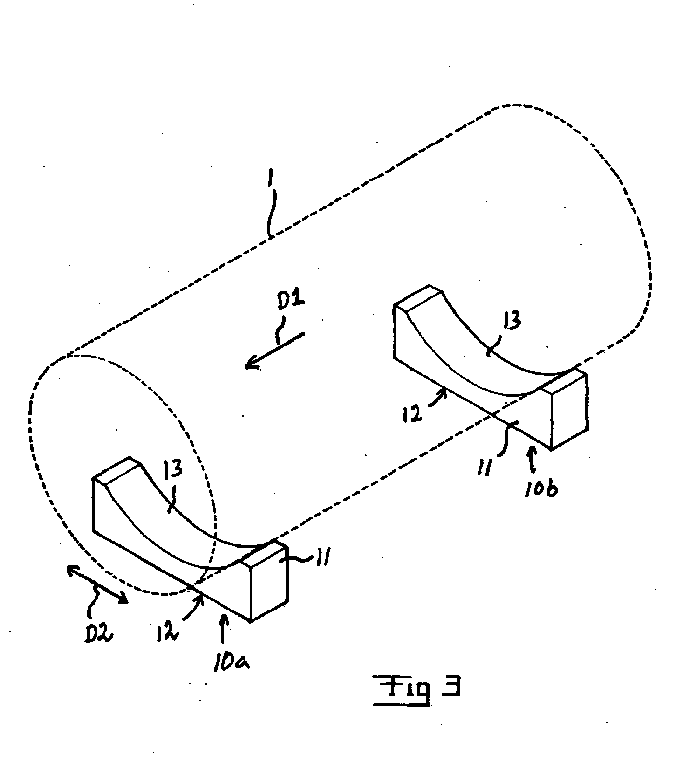

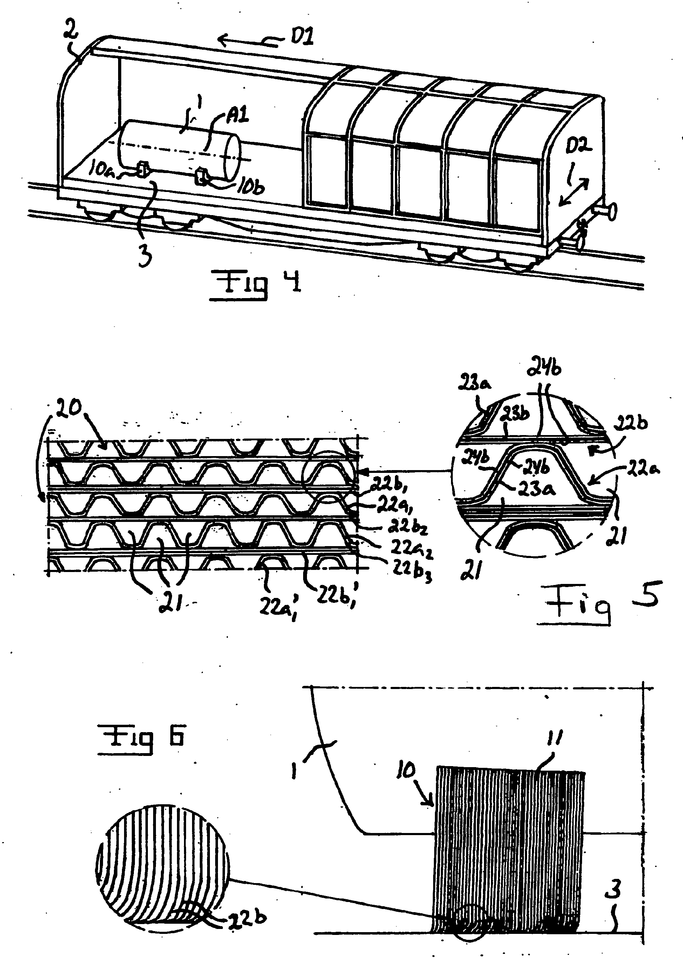

The use of two freight cradles of the type illustrated in Figs 1 and 2 when used for supporting a circular cylindrical object 1, such as a large and heavy paper roll from a paper factory, is illustrated in Figs 3 and 4. In Fig 4, the object 1 is arranged in a railway goods wagon 2. The object 1 is laying in the wagon 2 with its longitudinal axis A1 arranged in the intended traveling direction D1 of the wagon. The object 1 is supported by a first cradle 10a arranged at the forward end of the object and a second cradle 10b arranged at the rear end of the object. The object 1 rests against the support surface 13 of the respective cradle 10a, 10b via its envelope surface and is prevented from being displaced in relation to the respective cradle 10a, 10b in the lateral direction D2 owing to the concavely curved shape of the support surfaces 13. Each cradle 10a, 10b rests against the floor 3 of the wagon 2 via the base surface 12 of the cradle. In this case, the linerboards 22b of the sheets of corrugated cardboard forming the body 11 of the respective cradle 10a, 10b extend in the above-indicated lateral direction D2.

A paper roll 1 of the type illustrated in Figs 3 and 4 may have a weight of about 3-5 tons and the frictional forces between the paper roll 1 and the cradles 10a, 10b and between the cradles 10a, 10b and the floor surface 3 of the wagon 2 will in this case be sufficient in order to keep the paper roll 1 in place in the wagon 2 during normal transportation conditions. Thus, no additional securing of the paper roll 1 in the wagon is required.

According to the invention, a thin film 23a, 23b (see Fig 5) of plastic material is embedded in the flute boards 22a and the linerboards 22b of the laminated sheets 20 of corrugated cardboard forming the body 11 of the cradle 10. The plastic film 23a, 23b of each flute board 22a and linerboard 22b is covered on both sides by a layer 24a, 24b of paper material, as illustrated in the detail enlargement of Fig 5.

The sheets 20 of corrugated cardboard in the body 11 are of the double wall type, as illustrated in Fig 5. In this case, each sheet 20 consists of three parallel linerboards 22b₁-22b₃ and two flute boards 22a₁, 22a₂ with a first flute board 22a₁ arranged between a first linerboard 22b₁ and a second linerboard 22b₂ and the other flute board 22a₂ arranged between said second linerboard 22b₂ and a third linerboard 22b₃. The flute boards 22a₁, 22a₂ are suitably bonded to the adjacent linerboards 22b₁-22b₃ by means of waterproof adhesive.

The sheets 20 of corrugated cardboard in the body 11 are joined to each other with outer linerboards 22b₁', 22b₃ of adjacent sheets 20 glued to each other face-to-face, as illustrated in Fig 5. The sheets 20 of corrugated cardboard in the body 11 are suitably joined to each other by means of waterproof adhesive. The waterproof adhesive used for joining said sheets 20 to each other preferably comprises a water-repellent impregnating agent, suitably in the form of a polyvinyl alcohol. When two adjacent sheets 20 are bonded to each other by means of an adhesive comprising such an impregnating agent, the impregnating agent will penetrate through the linerboards 22b₁', 22b₃ that are in direct contact with the adhesive and further into a part of the adjacent flute boards 22a₁', 22a₂ that are bonded to the respective one of said linerboards 22b₁', 22b₃ and thereby impart a favourable water-repellency to these linerboards 22b₁', 22b₃ and these flute board parts, while still allowing water to be absorbed by the middle linerboard 22b₂ of each sheet 20 and the remaining parts of the flute boards.

When the cradle 10 supports an object 1 and the base surface 12 of the cradle body 11 is subjected to water, the water will be absorbed by flute boards and linerboards of the corrugated cardboard sheets 20 via the lower edges thereof. The absorbed water will reduce the strength of the body 11. This reduced strength will, under the load from the supported object 1, result in a bending of the lower ends of the flute boards 22a and linerboards 22b at the region closest to the base surface 12 so that these ends will come to lay essentially flat against the floor surface 3 under the cradle, as illustrated in Fig 6. Hereby, the lower ends of the thin plastic films 23a, 23b embedded in the flute boards 22a and linerboards 22b will likewise be bended so as to come to lay essentially flat against the floor surface 3 while overlapping each other. These bended and mutually overlapping ends of the plastic films 23a, 23b will form a water-resistant barrier along the floor surface 3 which counteracts further ingress of water from the floor surface 3 up into the flute boards 22a and linerboards 22b of the laminated sheets 20 of corrugated cardboard in the cradle body 11.

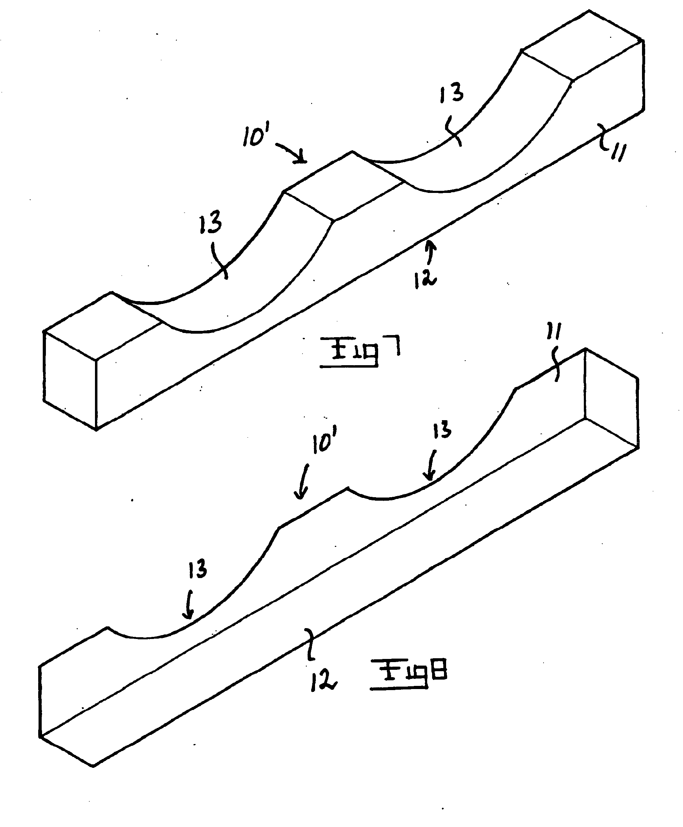

The inventive freight cradles 10 are with advantage designed and dimensioned for supporting a paper roll from a paper factory having a length of about 3-4 m, a diameter of about 1,2-1,5 m and a weight of about 3-5 tons. A freight cradle 10' according to the present invention designed for supporting two such paper rolls is illustrated in Figs 7 and 8. This cradle 10' is constructed by laminated sheets of corrugated cardboard in the manner described above with reference to Figs 1-6 and is provided with two support surfaces 13 and one base surface 12.

The invention is of course not in any way restricted to the embodiments described above. On the contrary, many possibilities to modifications thereof will be apparent to a person with ordinary skill in the art without departing from the basic idea of the invention such as defined in the appended claims.

## Claims

1. A freight cradle for supporting an object, such as a cylindrical or tubular object, on a floor surface and holding it in place, the cradle (10; 10') comprising a body (11) formed of laminated sheets (20) of corrugated cardboard, the body (11) having a base surface (12), through which the cradle is intended to rest on a floor surface, and a support surface (13) for receiving an object to be supported by the cradle, wherein the laminated sheets (20) of corrugated cardboard in the body (11) are so arranged that the tubular channels (21) formed between the corrugated flute boards (22a) and the planar linerboards (22b) of the laminated sheets extend between the base surface (12) and the support surface (13) essentially perpendicular to the base surface (12), **characterized in:**
- **that** a film (23a, 23b) of plastic material is embedded in the flute boards (22a) and the linerboards (22b) of the laminated sheets (20) of corrugated cardboard in the body (11), the plastic film (23a, 23b) of each flute board and linerboard being covered on both sides by a layer (24a, 24b) of paper material; and
- **that** the sheets (20) of corrugated cardboard in the body are of the double wall type, each sheet (20) consisting of three parallel linerboards (22b₁, 22b₂, 22b₃) and two flute boards (22a₁, 22a₂) with a first flute board (22a₁) arranged between a first linerboard (22b₁) and a second linerboard (22b₂) and the other flute board (22a₂) arranged between said second linerboard (22b₂) and a third linerboard (22b₃).

2. A load cradle according to claim 1, **characterized in that** the support surface (13) is concavely curved so as to essentially conform to the envelope surface of a circular cylindrical object to be supported by the cradle.

3. A load cradle according to claim 2, **characterized in that** the support surface (13) has an arc-shaped profile.

4. A load cradle according to any of claims 1-3, **characterized in that** the sheets (20) of corrugated cardboard in the body (11) are joined to each other with outer linerboards (22b₁', 22b₃) of adjacent sheets (20) glued to each other face-to-face.

5. A load cradle according to claim 4, **characterized in that** the sheets (20) of corrugated cardboard in the body (11) are joined to each other by means of waterproof adhesive.

6. A load cradle according to claim 5, **characterized in that** the sheets (20) of corrugated cardboard in the body (11) are joined to each other by means of waterproof adhesive comprising a water-repellent impregnating agent.

7. A load cradle according to claim 6, **characterized in that** said impregnating agent is a polyvinyl alcohol.

8. A load cradle according to any of claims 1-7, **characterized in that** the flute boards (22a₁, 22a₂) of the sheets (20) of corrugated cardboard in the body (11) are bonded to the adjacent linerboards (22b₁, 22b₂, 22b₃) of the associated sheet by means of waterproof adhesive.

## Patentansprüche

1. Frachtwiege zum Abstützen eines Gegenstandes, beispielsweise eines zylindrischen oder rohrförmigen Gegenstandes, auf einer Boden-Oberfläche und zum Halten dieses Gegenstandes an Ort und Stelle, wobei die Wiege (10; 10') einen Körper (11) aufweist, der aus laminierten Bögen (20) aus Wellpappkarton besteht, und der Körper (11) eine untere Oberfläche (12) aufweist, mit der die Wiege auf einer Boden-Oberfläche ruhen soll, sowie eine Stütz-Oberfläche (13) zur Aufnahme eines durch die Wiege abzustützenden Gegenstandes, und wobei die laminierten Bögen (20) aus Wellpappkarton in dem Körper (11) so angeordnet sind, daß die rohrförmigen Kanäle (21), die sich zwischen den gewellten, gekehlten Kartons (22a) und den planaren Einlagekartons (22b) der laminierten Bögen ausgebildet sind und die sich zwischen der unteren Oberfläche (12) und der stützenden Oberfläche (13) erstrecken, im wesentlichen lotrecht zur unteren Oberfläche (12) verlaufen, **dadurch gekennzeichnet, daß** in den gekehlten Kartons (22a) und den Einlagekartons (22b) der laminierten Bögen (20) aus Wellpappkarton in dem Körper (11) eine Kunststoff-Materialschicht (23a, 23b) eingebettet ist, daß die Kunststoffschicht (23a, 23b) jedes gekehlten Kartons und Einlagekartons auf beiden Seiten durch eine Schicht (24a, 24b) aus Papiermaterial abgedeckt ist; und daß die Bögen (20) aus Wellpappkarton in dem Körper dem Doppelwandtyp entsprechen, wobei jeder Bogen (20) aus drei parallelen Einlagekartons (22b₁, 22b₂, 22b₃) sowie zwei gekehlte Kartons (22a₁, 22a₂) gebildet ist, wobei ein erste gekehlte Karton (22a₁) zwischen einem ersten Einlagekarton (22b₁) und einem zweitem Einlagekarton (22b₂) angeordnet ist und der andere gekehlte Karton (22a₂) zwischen dem zweiten Einlagekarton (22b₂) und einem dritten Einlagekarton (22b₃) angeordnet ist.

2. Frachtwiege nach Anspruch 1, **dadurch gekennzeichnet, daß** die stützende Oberfläche (13) konkav gekrümmt ist, so daß sie im wesentlichen der Hüll-Oberfläche eines kreisrunden, zylindrischen Gegenstandes entspricht, der mit der Wiege abgestützt werden soll.

3. Frachtwiege nach Anspruch 2, **dadurch gekennzeichnet, daß** die stützende Oberfläche (13) ein bogenförmiges Profil aufweist.

4. Frachtwiege nach einem der Ansprüche 1 bis 3, **dadurch gekennzeichnet, daß** die Bögen (20) aus Wellpappkarton in dem Körper (11) mit äußeren Einlagekartons (22b₁', 22b₃) benachbarter Bögen (20) verbunden sind, die Fläche an Fläche miteinander verklebt sind.

5. Frachtwiege nach Anspruch 4, **dadurch gekennzeichnet, daß** die Bögen (20) aus Wellpappkarton in dem Körper (11) miteinander durch einen wasserdichten Klebstoff verbunden sind.

6. Frachtwiege nach Anspruch 5, **dadurch gekennzeichnet, daß** die Bögen (20) aus Wellpappkarton im Körper (11) miteinander durch wasserdichten Klebstoff verbunden sind, der ein wasserabweisendes Imprägniermittel aufweist.

7. Frachtwiege nach Anspruch 6, **dadurch gekennzeichnet, daß** das Imprägniermittel ein Polyvinyl-Alkohol ist.

8. Frachtwiege nach einem der Ansprüche 1 bis 7, **dadurch gekennzeichnet, daß** die gekehlten Kartons (22a₁, 22a₂) der Bögen (20) aus Wellpappkarton in dem Körper (11) mit den benachbarten Einlagekartons (22b₁, 22b₂, 22b₃) des zugehörigen Bogens durch wasserdichten Klebstoff verklebt sind.

## Revendications

1. Support de charge pour supporter un objet, comme un objet cylindrique ou tubulaire, sur la surface d'un sol et le maintenant en place, le support (10, 10') comprenant un corps (11) formé de feuilles laminées (20) de carton ondulé, le corps (11) ayant une surface de base (12), par laquelle le support est destiné à reposer sur la surface d'un sol, et une surface de support (13) pour recevoir un objet devant être supporté par le support, où les feuilles laminées (20) de carton ondulé dans le corps (11) sont disposées de façon à ce que les canaux tubulaires (21) formés entre les planches de cannelures ondulées (22a) et les cartons à couverture planaires (22b) des feuilles laminées s'étendent entre la surface de base (12) et la surface de support (13) de manière essentiellement perpendiculaire à la surface de base (12),
**caractérisé en ce que :**
- un film (23a, 23b) de matière plastique est incrusté dans les planches de cannelures (22a) et les cartons à couverture (22b) des feuilles laminées (20) de carton ondulé dans le corps (11), le film plastique (23a, 23b) de chaque planche de cannelure et de chaque carton à couverture étant couvert sur ses deux faces par une couche (24a, 24b) de matériau de papier, et **en ce que**
- les feuilles (20) de carton ondulé dans le corps sont du type à double paroi, chaque feuille (20) étant composée de trois cartons à couverture parallèles (22b₁, 22b₂, 22b₃) et deux plaques de cannelures (22a₁, 22a₂) avec une première plaque de cannelures (22a₁) placée entre un premier carton à couverture (22b₁) et un deuxième carton à couverture (22b₂) et l'autre plaque de cannelures (22a₂) placée entre le dit deuxième carton à couverture (22b₂) et un troisième carton à couverture (22b₃).

2. Support de charge selon la revendication 1, **caractérisé en ce que** la surface de support (13) est incurvée de manière concave de façon à se conformer en grande partie à la surface d'enveloppe d'un objet cylindrique circulaire devant être supporté par la bascule.

3. Support de charge selon la revendication 2, **caractérisé en ce que** la surface de support (13) a un profil en forme d'arc de cercle.

4. Support de charge selon l'une quelconque des revendications 1 à 3, **caractérisé en ce que** les feuilles (20) de carton ondulé dans le corps (11) sont jointes les unes aux autres par les cartons à couverture externes (22b₁, 22b₃) des feuilles adjacentes (20) collés les uns aux autres en face à face.

5. Support de charge selon la revendication 4, **caractérisé en ce que** les feuilles (20) de carton ondulé dans le corps (11) sont jointes les unes aux autres au moyen d'un adhésif résistant à l'eau.

6. Support de charge selon la revendication 5, **caractérisé en ce que** les feuilles (20) de carton ondulé dans le corps (11) sont jointes les unes aux autres au moyen d'un adhésif résistant à l'eau comprenant un agent d'imprégnation imperméabilisant à l'eau.

7. Support de charge selon la revendication 6, **caractérisé en ce que** le dit agent d'imprégnation est un alcool de polyvinyle.

8. Support de charge selon l'une quelconque des revendications 1 à 7, **caractérisé en ce que** les plaques de cannelures (22a₁, 22a₂) des feuilles de carton ondulé dans le corps (11) sont liées aux cartons à couverture adjacents (22b₁, 22b₂, 22b₃) de la feuille associée au moyen d'un adhésif résistant à l'eau.
